# FASCICULE DE BREVET EUROPEEN

(11) **EP 0 681 069 B1**
(45) Date de publication et mention de la délivrance du brevet: **06.12.1995**
(21) Numéro de dépôt: 94440020.9
(22) Date de dépôt: 29.03.1994
(51) Int. Cl.: E04B 9/26, E04B 9/28, F16B 5/00, E04B 9/00, E04B 9/02

(54) **Faux-plafond suspendu circulable**
Begehbare, abgehängte Decke
Accessible suspended false ceiling

(43) Date de publication de la demande: 08.11.1995
(73) Titulaire: CLESTRA CLEANROOM, Société Anonyme, F-67200 Strasbourg (FR)
(72) Inventeur: Goepp, André, F-67230 Huttenheim (FR)
(74) Mandataire: Littolff, Denis

(56) Documents cités:
- DE-A- 2 553 109
- DE-A- 3 844 548
- DE-C- 481 182
- FR-A- 1 064 940
- FR-A- 1 238 720
- FR-A- 2 245 832
- FR-A- 2 339 718
- FR-A- 2 627 206
- GB-A- 1 335 122
- US-A- 2 143 980
- US-A- 2 969 667
- US-A- 5 207 035

## Description

La présente invention concerne un faux-plafond suspendu circulable, conçu de préférence pour les salles blanches, et essentiellement constitué de panneaux juxtaposés suspendus à des rails rectilignes parallèles fixés à la dalle supérieure de la pièce, et son procédé de montage. Un tel faux-plafond est connu du document US-A-2 143 980.

L'utilisation dans des salles blanches, et plus généralement dans des salles à atmosphère contrôlée, impose des contraintes particulières notamment au niveau des critères d'étanchéité.

Les différences de pression qui peuvent exister en fonctionnement dans les volumes contigus, tels que le plénum et la salle, nécessitent enfin une structure mécanique offrant des garanties suffisantes de rigidité, notamment lors de brutales surpressions, et pouvant être accessibles, voire démontable, en cas de problèmes toujours possibles compte tenu de la complexité technique de ces salles.

L'objectif de l'invention est donc de réaliser un faux-plafond étanche, accessible, démontable et présentant sur sa surface inférieure une surface la plus lisse possible.

Le faux-plafond de l'invention est conçu pour être accessible depuis l'extérieur de la pièce, directement par le plénum afin d'éviter toute intervention de maintenance à l'intérieur des salles blanches, ceci afin de imiter tout risque de contamination de l'air ambiant. Il est donc circulable, le personnel chargé de son montage / démarrage, voire de la maintenance dans certains cas, le parcourant pour effectuer les opérations dont il est chargé. Il est également démontable, mais pas depuis la salle blanche proprement dite. Ces choix concernant l'accessibilité ainsi que des contraintes mécaniques tenant à la structure des panneaux composant le faux-plafond ont guidé la conception, telle que décrite ci-après.

L'invention est definie dans la deuxième partie de la revendication principale.

Selon une direction transversale à la première, les panneaux sont verrouillés les uns aux autres par des moyens de verrouillage qui assurent la solidarisation à la jointure entre panneaux contigus et sont disposés sur la surface supérieure du faux-plafond, à partir de laquelle ils sont montés.

Vu de la salle blanche, le plafond se compose d'un ensemble de panneaux juxtaposés, dont les côtés ne sont toutefois pas en contact mais séparés par des interstices résiduels de largeur constante, permettant notamment le passage des pattes de suspension. Ces interstices, dont la taille n'excède en pratique pas quelques millimètres, sont équipés de joints assurant l'étanchéité, et placés au débouché des surfaces inférieure et supérieure du faux-plafond.

Ces joints, par exemple de type silicone, peuvent être prévus de forme telle qu'ils affleurent la surface inférieure, de sorte que l'exigence d'absence de reliefs mentionnée ci-dessus soit respectée.

Une autre particularité des salles blanches ou équivalentes réside dans les différences entre les pressions qui existent dans les divers volumes constituant ces salles, et qui ont notamment pour but d'éviter les contaminations croisées d'une salle à l'autre. Il peut arriver que la pression qui existe dans la salle blanche proprement dite, sous le faux-plafond, devienne soudain très différente de celle qu'on trouve dans le plénum, pour diverses raisons. Les efforts exercés sur les dalles se trouvent alors brusquement fortement augmentés, et, si la surpression existe dans la salle, on court le risque que les panneaux soient repoussés vers le haut, mettant à mal dans un premier temps tout le système d'étanchéification, et risquant par la suite d'endommager le système mécanique.

C'est pourquoi, selon une configuration particulière, les pattes de suspension sont disposées symétriquement par rapport à la direction des rails, et se trouvent par conséquent au contact des pattes du panneau contigu, en position symétrique par rapport au plan vertical. Un couple de deux pattes de suspension en contact de deux panneaux contigus sont équipés d'un moyen de blocage de tout mouvement relatif vertical pattes / rails, qui est installé après clipsage des panneaux dans leurs rails récepteurs. Dans cette configuration, les pattes sont toujours par groupe de deux, identiques et symétriques par rapport au plan vertical de leur zone de contact, à l'image d'un reflet dans un miroir.

Le moyen de blocage agit autour d'un couple de pattes au niveau de la surface inférieure du rail rectiligne et empêche le mouvement de l'un par rapport à l'autre.

L'un des avantages de la structure tient à la facilité de montage, notamment due au fait qu'une fois disposé, chaque panneau peut coulisser dans les rails récepteurs de suspension grâce à la forme du crochet terminal de la patte de suspension. Cette forme est prévue pour assurer deux fonctionnalités distinctes, le clipsage par action de type transversale au rail, et le coulissement par action de type longitudinale. La forme des faces latérales verticales des ras est bien entendu prévue en conséquence.

Plus précisément, les pattes de suspension sont divisées en trois parties :
- une partie supérieure d'extrémité de type unciforme, destinée à coopérer avec la glissière correspondante du rail, dont le profil externe supérieur permet le clipsage, en relation avec la forme globale de cette partie supérieure, qui autorise un jeu élastique et est décalée au repos vers l'intérieur du panneau auquel elle est solidarisée, de façon à ne pas être au contact avec la partie homologue de la patte de suspension du panneau voisin avec laquelle elle est couplée, et à permettre la déformation élastique nécessaire au clipsage,
- une partie médiane au contact de son homologue du panneau contigu, et
- une partie inférieure destinée à la fixation de la patte de suspension sur la périphérie du panneau.

Chacune de ces parties réalise des fonctions propres.

La partie médiane permet le positionnement relatif de deux pattes d'un même couple, fixées à deux panneaux contigus. Leur plan de contact s'identifie au plan du miroir évoqué ci-dessus, et est toujours vertical pour permettre la symétrie correspondante. Selon le cas, elles définissent également une épaisseur constante entre les panneaux.

La partie supérieure d'une patte est rentrante vers le centre d'un panneau. Comme on l'a vu, cela s'explique d'une part par la nécessité d'éviter le contact avec la patte symétrique du couple, à cause des fonctions impliquant une mobilité comme le clipsage ou le coulissement. Le clipsage impose en particulier le déplacement de cette partie vers la périphérie du panneau, d'où la nécessité absolue d'absence de contact au repos.

D'autre part, les deux pattes d'un même couple sont nécessairement accrochées au même rail, lequel doit présenter une symétrie de même plan vertical que ledit couple. Par conséquent, chaque crochet supérieur coopère avec une face latérale du rail qui est bien entendu distante de son homologue symétrique, pour les besoins de l'accrochage.

Enfin, le clipsage nécessite non seulement une certaine élasticité du matériau avec lequel les pattes sont construites, mais aussi une forme permettant d'améliorer l'application des propriétés élastiques, ce qui est réalisé au moyen de cette forme rentrante, par une portion oblique définissant une sorte d'axe de pivotement sur la ligne d'angle.

La partie inférieure coopère quant à elle avec le profil d'un des côtés verticaux du panneau, qui constitue une glissière permettant un positionnement libre de la patte à n'importe quel endroit sur toute la longueur du côté, ainsi que l'adjonction d'un nombre quelconque de pattes supplémentaires selon les efforts à supporter. En général, on prévoit quatre pattes par panneau au minimum.

Compte tenu du procédé de montage de ce type de faux-plafond, qui implique préférentiellement l'accrochage des panneaux du bas vers le haut et du type de fixation des parties inférieures des pattes, il est bien entendu que les pattes sont fixées à l'avance sur les panneaux, avant leur suspension. Montage, mise en place et clipsage sont assurés au moyen d'un lift télescopique (d'une capacité d'environ 30 à 35 kg/m²).

L'étude des pattes de suspension montre suffisamment la manière d'assurer le positionnement longitudinal (dans la direction des rails) des rangées de panneaux. Par contre, le positionnement transversal, entre deux panneaux contigus d'une même rangée, n'a pas encore été abordé.

Ce second positionnement s'effectue au moyen d'un excentrique de verrouillage et d'une clé qui coopèrent en vue d'assurer entre les panneaux une pression mutuelle de direction horizontale et parallèle aux rails, facilitant l'étanchéification des jointures transversales.

Plus précisément, l'excentrique consiste en une pièce cylindrique munie d'oreilles planes parallèles à sa direction axiale, pour sa fixation aux panneaux. Cette pièce cylindrique comporte des zones périphériques longitudinales planes débouchant sur une rainure d'allure prismatique bordée d'un épaulement, parallèles à la génératrice du cylindre, et faisant office de came lors d'un mouvement rotatif par rapport à la clé, laquelle coopère avec une fente transversale médiane du cylindre.

Cette clé effectue le verrouillage proprement dit. A cet effet, elle comporte une partie inférieure qui coopère avec les glissières de deux panneaux contigus, de manière à la plaquer contre sa partie médiane située entre lesdits panneaux et effectuant la liaison avec la partie supérieure accessible depuis la surface supérieure du faux-plafond. Les panneaux sont donc transversalement séparés par les parties médianes des clés, et exercent un effort sur deux côtés opposés de chacune de celles-ci.

La partie supérieure de chaque clé repose dans la rainure prismatique de l'excentrique de verrouillage, au contact de l'épaulement, afin de réaliser le verrouillage. L'excentrique est lui-même fixé au faux-plafond, par exemple à l'aide de vis traversant lesdites oreilles planes, perforées à cet effet.

Les panneaux pouvant s'adapter à ce type de structure sont multiples, pourvu qu'ils puissent s'adapter aux configurations des éléments évoqués auparavant. Toutefois, selon une configuration préférentielle, ils sont composés de deux parements identiques reliés par un bandeau périphérique en forme de glissière en T renversé creusé, et ils sont remplis d'une matière isolante de type synthétique choisie en fonction de l'usage ultérieur.

Ces parements sont par exemple réalisés à partir de tôles métalliques découpées et pliées, et le bandeau peut être fabriqué en métal extrudé ou profilé, l'ensemble étant ensuite vissé ou soudé. Cette fabrication présente des avantages économiques substantiels et permet une grande précision de dimensionnement. Il s'agit là d'un critère prépondérant pour le type l'utilisation de ces faux-plafonds en atmosphère contrôlée.

Selon une configuration possible, la partie inférieure de la clé de verrouillage prend la forme d'un U sur la base duquel la partie médiane est centrée et dont les deux branches s'ajustent dans les glissières des deux panneaux contigus de manière à les amener au contact de ladite partie médiane. La partie supérieure comporte une barre horizontale positionnée sur la partie médiane à la manière de la barre supérieure d'un T, et s'adaptant comme on l'a dit dans la rainure prismatique de l'excentrique de verrouillage. Comme on peut l'imaginer, la clé en position de verrouillage respecte une symétrie par rapport à l'interstice séparant les panneaux, du fait de la similarité desdits panneaux et de la nécessité d'équilibrer les actions s'exerçant sur eux.

A ce stade, les panneaux sont verrouillés longitudinalement (dans la direction des ras) et transversalement. Pour éviter un déplacement vertical des panneaux dû à une dépression ou à une surpression dans un des deux volumes qu'ils séparent, on a également prévu une sorte de verrouillage vertical à l'aide d'une coiffe qui équipe les couples de pattes de suspension. Il s'agit en réalité de bloquer tout mouvement relatif pattes / rail, au moyen de ladite coiffe installée après verrouillage des panneaux entre eux.

Selon une possibilité, celle-ci consiste en un volume creux d'enveloppe sensiblement parallélépipédique dont la partie supérieure ouverte est dotée d'un bord prévu pour s'adapter à la forme des faces latérales du rail. L'une des faces transversales à l'axe du rail est interrompue pour permettre le passage vers le centre de la coiffe des deux pattes de suspension, qui sont ainsi entourés par la coiffe, tandis que l'autre comporte un relief s'insérant entre lesdites pattes pour marquer leur écartement.

La coiffe et les pattes sont en outre munies d'orifices disposés à une position telle que lorsque la coiffe est en butée supérieure au contact des faces latérales verticales du rail, les orifices sont alignés et peuvent loger une clavette qui est alors en contact avec les portions de la surface inférieure desdites faces latérales du rail, au niveau des glissières. Cette clavette solidarise de fait la coiffe à l'ensemble pattes de suspension / rail.

Si le couple des deux pressions existant de part et d'autre du faux-plafond est tel qu'il se produit une poussée verticale des panneaux vers le haut, la coiffe clavetée à cet ensemble empêche les extrémités unciformes de décoller des glissières des faces verticales du rail. Le verrouillage vertical est donc assuré.

Selon une possibilité, cette clavette agit par expansion élastique transversale de deux branches sensiblement parallèles au contact au moins partiel l'une de l'autre. L'une est rectiligne alors que la seconde présente une courbe dans sa partie médiane et un recourbement dans sa partie terminale. Le matériau élastique permet la déformation de la branche non rectiligne et l'arc-boutement assure la solidarisation.

Le procédé de montage d'un plafond suspendu selon la présente invention présente les étapes suivantes :
- montage des panneaux à partir du sol, à l'aide d'appareils connus en soi (lift télescopique par exemple), jusqu'à fixation par clipsage dans les rails rectilignes préalablement fixés à la dalle supérieure de la pièce ; les panneaux sont par conséquent équipés de leurs pattes de suspension, assemblées en usine ;
- verrouillage transversal à l'aide des couples excentriques / clés de verrouillage, par un opérateur circulant sur les panneaux ;
- blocage vertical des couples de pattes de suspension par rapport aux rails, par l'opérateur, qui équipe ces zones avec des coiffes de verrouillage telles que décrites auparavant ;
- pose des joints d'étanchéité.

Comme on l'a spécifié initialement l'accès au plénum se fait par l'extérieur de la pièce, et permet à l'opérateur d'emprunter une autre voie que celle qui consisterait à descendre sous le faux-plafond pour quitter celui-ci.

Un tel faux-plafond est particulièrement simple à monter, mais également à fabriquer. Les avantages économiques prouvés ne sont au surplus pas contrebalancés par des insuffisances techniques. Au contraire, les technologies employées dans la fabrication garantissent précision des côtes et fiabilité de la structure.

Dans la suite, il va être procédé à une description plus détaillée des divers éléments de l'invention, ainsi que de leur assemblage, à l'aide des dessins annexés, pour lesquels :
- La figure 1 est une perspective d'une portion de faux-plafond selon l'invention, vue sur sa surface supérieure,
- La figure 2 est une coupe transversale au niveau d'un couple de pattes de suspension,
- La figure 3 est une perspective légèrement éclatée du dispositif de suspension aux rails,
- La figure 4 est une coupe longitudinale permettant de comprendre le fonctionnement du verrouillage transversal,
- La figure 5 montre un couple excentrique / clé de verrouillage transversal, en vue perspective,
- La figure 6 représente une vue perspective d'une coiffe de blocage vertical, et
- La figure 7 reprend la coupe de la figure 2, avec adjonction d'une coiffe de blocage.

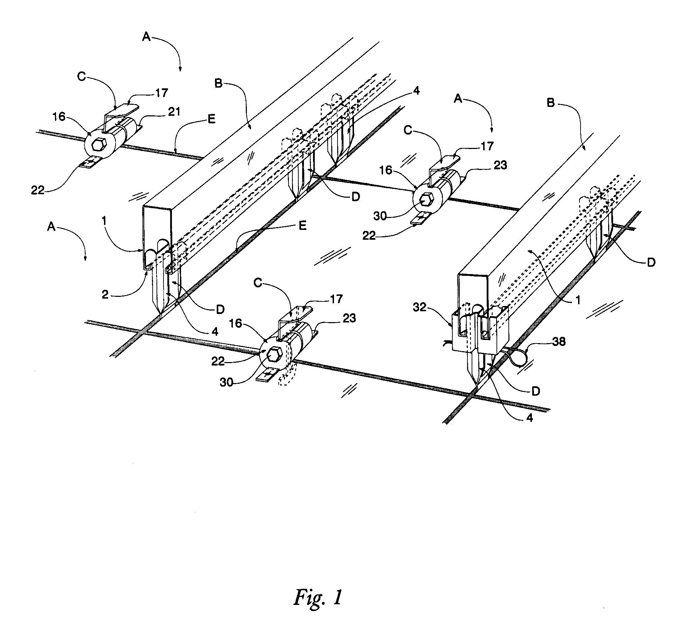

Les figures proposent un mode de réalisation de faux-plafond selon l'invention. Selon la figure 1, les panneaux constituant le faux-plafond sont référencés (A) alors que les rails sont référencés (B), les systèmes de verrouillage transversal sont notés (C) et les couples de pattes de suspension apparaissent sous la référence (D). Cette figure représente un faux-plafond déjà assemblé, en état de fonctionner. C'est sur cette surface que circule l'opérateur chargé d'effectuer les verrouillages transversal et vertical après l'accrochage des panneaux.

La présence des couples de pattes (D) d'une part, et des systèmes de verrouillage transversal (C) d'autre part, conduit à l'existence d'interstices résiduels entre les panneaux individuels (A), sur leurs quatre côtés. Ces interstices sont obstrués par des joints (E) par exemple de type silicone, qui aident à maintenir une étanchéité correcte, en tout cas compatible avec le cahier des charges de la salle blanche installée au-dessous. Ces joints (E) sont bien entendu placés de part et d'autre de la clé de verrouillage du système (C), et du couple de pattes de suspension (D).

Parmi les détails qu'elle laisse connaître, cette figure 1 fait apparaître les faces latérales verticales (1) des rails (B) dans lesquelles viennent prendre appui en parties terminales supérieures (3) de type unciforme des pattes de suspension (4) proprement dites. La possibilité de coulissement des pattes (4) dans les glissières inférieures (2) desdites faces latérales est nettement visible. Il en va de même pour l'enveloppe extérieure en forme de came de l'excentrique de verrouillage (16), avec une rainure horizontale dans laquelle repose la clé de verrouillage (17) en position de blocage. Les deux oreilles (22, 23) de fixation au faux-plafond sont également solidarisées à ce dernier par l'opérateur chargé du montage final. Ce dernier installe enfin les coiffes (32) de blocage vertical, qu'il solidarise à l'aide d'une clavette (38) de type particulier.

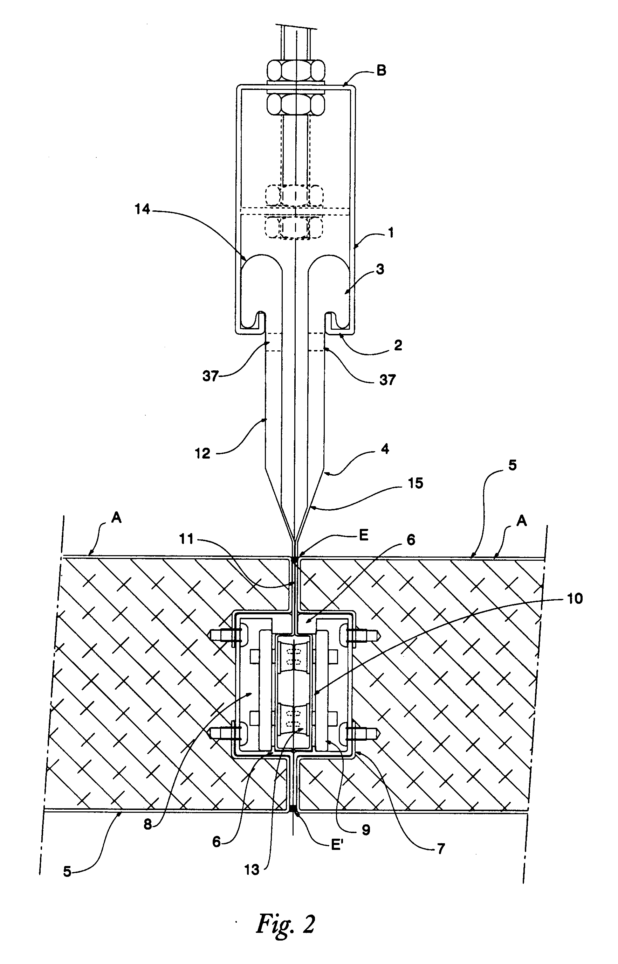

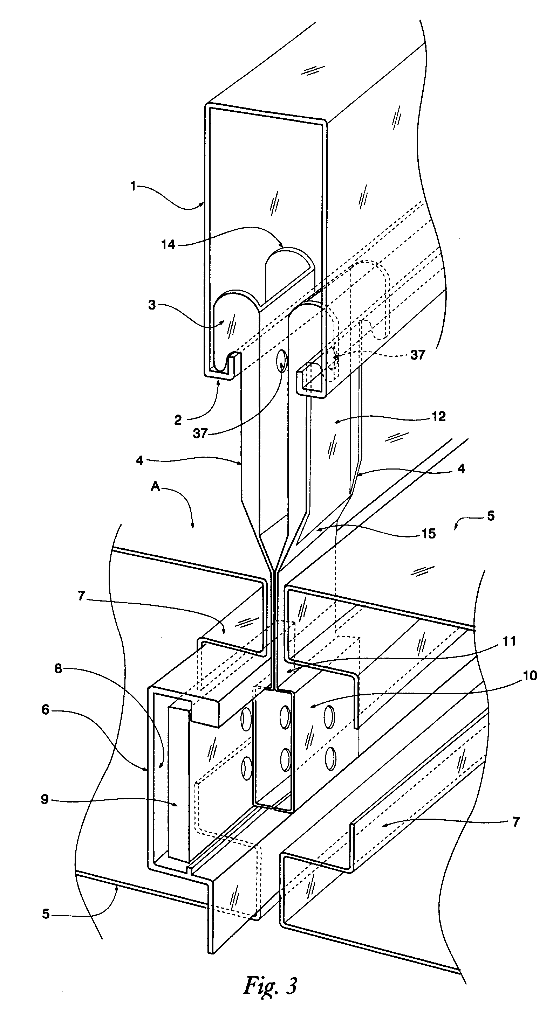

Pour la bonne intelligence du dispositif d'accrochage aux rails, les figures 2 et 3 sont à considérer ensemble, l'une systématisant au niveau fonctionnel ce que l'autre laisse découvrir de manière plus intuitive. On ne décrit pas le système de fixation des rails à la dalle supérieure de la pièce, qui est connu en soi, et réalisé à l'aide d'un dispositif à tige filetée / boulons très classique.

Le rail (B) est un profilé classique en U avec des bords rentrants (2) à l'extrémité inférieure des faces latérales verticales (1). Ces bords rentrants (2) servent de glissières horizontales aux extrémités cylindriques (3) des pattes de suspension (4), qui peuvent s'y déplacer selon l'axe du rail (B).

Chaque panneau (A) est constitué de deux parements (5) identiques reliés par un bandeau périphérique (6), par exemple en aluminium extrudé ou en métal profilé, vissé sur les bordures internes (7) desdits parements (5). Le bandeau périphérique (6) a une forme qui lui permet dans une certaine mesure de jouer le rôle d'une glissière (8) dans laquelle une plaquette de fixation (9) est mobile en translation rectiligne. C'est à cette plaquette que vient se fixer la partie inférieure (10) des pattes de suspension (4), par exemple par vissage au moyen des vis (13).

La partie inférieure (10) est reliée à la partie supérieure (12) va une partie médiane (11) qui est seule au contact de son homologue de la patte du panneau contigu (A), avec laquelle elle forme un couple (D). Cette partie médiane (11) impose l'épaisseur de l'interstice longitudinal entre panneaux (A).

La partie supérieure (12) contient plusieurs fonctionnalités distinctes, déjà évoquées auparavant. En premier lieu, elle doit réaliser le clipsage. C'est pourquoi, sa partie terminale unciforme (3) a un profil extérieur arrondi qui lui permet, en combinaison avec l'élasticité du matériau, de s'écarter vers l'axe du rail (B), au moment de la poussée vers le haut, de pénétrer à l'intérieur de celui-ci et d'être rappelée vers la position de repos lorsque la glissière du rail (B) est dépassée vers le haut. Le clipsage est alors réalisé.

C'est la raison pour laquelle ladite position de repos se situe décalée vers le centre du panneau, par rapport à la périphérie proprement dite au niveau de laquelle se situe la partie médiane (11). La poussée vers le haut sur le panneau est transformée en une poussée horizontale sur la patte vers la périphérie du panneau par l'arrondi extérieur (14) du profil supérieur. Il importe cependant que le premier contact entre l'extrémité unciforme (3) de la patte (4) de suspension et l'extrémité inférieure du rail (B) se produise sous le point culminant de la courbe (14), côté intérieur du panneau (A), afin que la poussée horizontale s'exerce dans le bons sens dans l'optique du clipsage.

L'oblique (15) générant le décalage vers l'intérieur du panneau (A) de ladite partie supérieure (12) est également important pour deux raisons :
- dans cette configuration, les pattes (4) sont groupées par couple, et chacune doit avoir une marge de manoeuvre suffisante pour pouvoir effectuer son déplacement vers l'extérieur du panneau nécessaire au clipsage,
- cette forme contribue à améliorer l'élasticité de la partie supérieure (12).

Enfin, le profil interne de la partie unciforme (3) doit être conçu de telle manière que le coulissement soit possible, en même temps qu'un certain maintien latéral des crochets afin d'éviter toute dérive transversale.

De la même manière que sur la surface supérieure du faux-plafond, un joint (E'), par exemple de type silicone, est appliqué dans les interstices de la surface inférieure dudit faux-plafond.

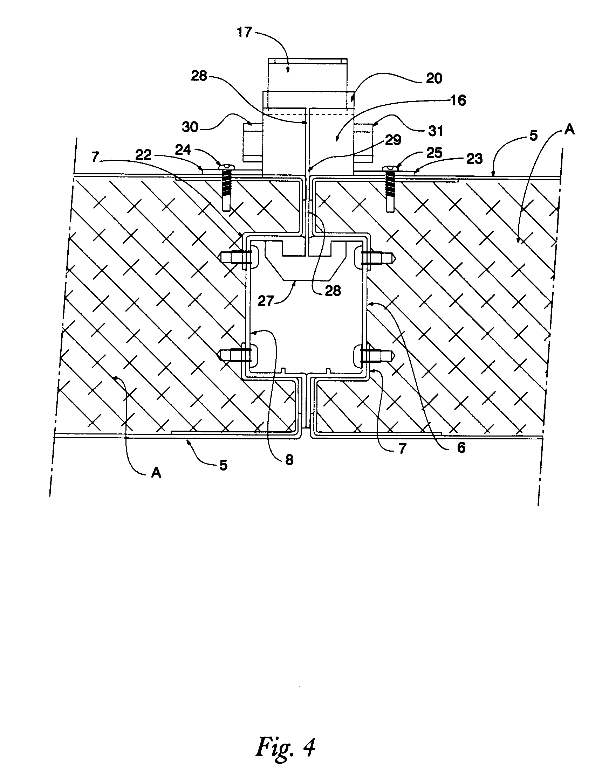

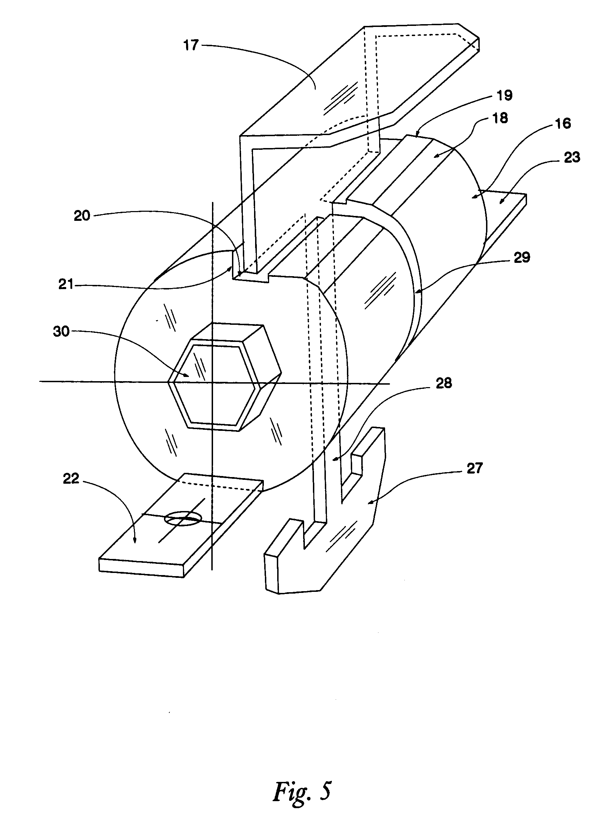

Les figures 4 et 5 s'appréhendent également de concert, l'une étant fonctionnelle tandis que l'autre est plus explicative. L'excentrique de verrouillage (16) est imbriqué avec la clé de verrouillage (17) en position de blocage. La partie de type came de l'excentrique (16) réside dans les méplats longitudinaux (18, 19) et la rainure prismatique (20) qui apparaissent en figure 5.

En position de verrouillage, l'épaulement (21) surplombant ladite rainure possède une surface verticale, alors que le fond de la rainure est horizontal, de même que les oreilles planes (22, 23) à fixer sur le faux-plafond, par exemple au moyen de vis (24, 25).

Lorsque la partie supérieure (26) en T de la clé (17) est au repos dans la rainure (20), la partie inférieure en U (27) de cette clé est étroitement ajustée dans les deux bordures internes du bandeau (6) formant la partie supérieure de la glissière (8). Les deux panneaux contigus (A) sont par conséquent rappelés l'un vers l'autre, et butent sur la partie médiane en tige (28) de la clé (17).

La partie médiane (28) est elle-même enclavée dans une fente transversale (29) de l'excentrique de verrouillage (16). L'épaisseur de l'ensemble de la clé (17) permet de la glisser entre deux panneaux (A) lorsque ceux-ci sont montés à proximité de l'autre sans être verrouillés, comme c'est le cas après la première phase du montage, lorsque tous les panneaux (A) sont posés, puis de lui faire effectuer une rotation d'axe vertical de 90° pour la mettre en position de verrouillage.

On remarque deux têtes d'écrou (30, 31) aux deux extrémités axiales de l'excentrique (16) de verrouillage. Ces deux têtes (30, 31) coopèrent avec une clé à deux branches parallèles (non représentée) dont les deux extrémités sont dotées d'orifices à six pans s'ajustant dans lesdites têtes (30, 31). L'opérateur la manipule de manière à faire tourner l'excentrique pour l'amener en position de verrouillage.

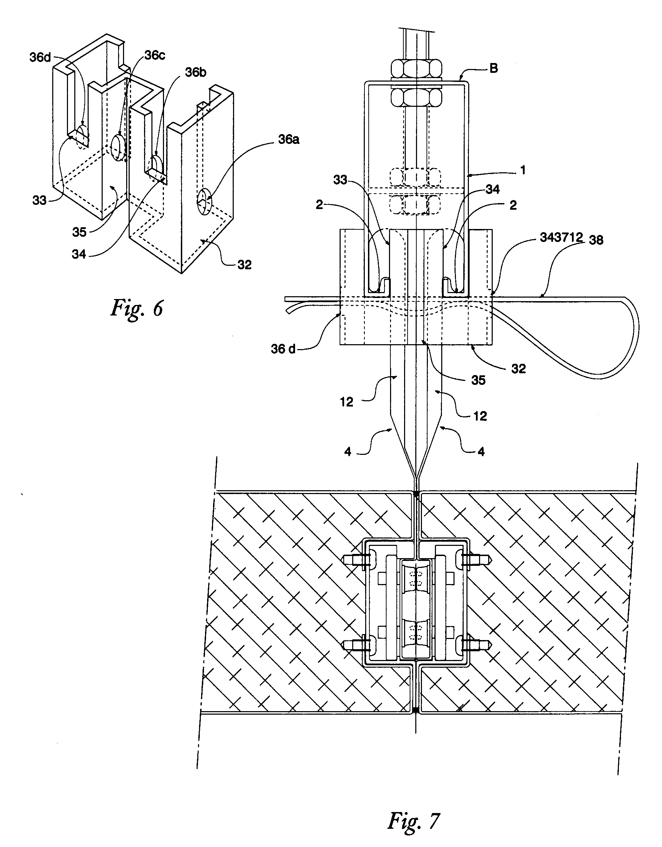

La coiffe de blocage (32) apparaît en figure 6, libre de tout montage. Sa fabrication est simple, par découpage d'une tôle ou par usinage d'un matériau de type RILSAN selon la forme finale à obtenir, puis plage selon les appuis et contacts voulus en position de verrouillage vertical.

Le côté apparaissant au premier plan comporte deux créneaux (33, 34) destinés à s'ajuster à l'extérieur des glissières inférieures (2) du rail (B). Sur la face opposée, ces créneaux ne sont qu'ébrauchés, cette face étant ouverte pour permettre le passage des couples de pattes de suspension (D), lesquelles sont alors enveloppées dans le volume délimité par la coiffe (32). l'enveloppe est globalement parallélépipédique de manière à entrer en contact avec toutes les surfaces d'appui utiles de l'ensemble formé par les couples de pattes (D) et le rail à l'endroit considéré.

Le côté placé au premier plan comporte également un relief (35) qui pénètre à l'intérieur du volume parallélépipédique et est destiné à s'insérer entre les deux pattes du couple (D), entrant en contact avec une partie de la surface verticale des portions supérieures (12) desdites pattes (4). Enfin, l'enveloppe est percée d'orifices coaxiaux (36a, 36b, 36c, 36d) dans une direction transversale à celle du rail (B) et de préférence perpendiculaire à celui-ci.

L'examen de la figure 7 montre l'agencement relatif du système rail (B) / couple de pattes (D) / coiffe de blocage (32). Cette dernière vient en butée vers le haut sur les parois latérales (1) verticales du rail (B), par le biais des créneaux (33, 34) et des créneaux tronqués opposés. Les pattes (4) sont maintenues à distance par le relief (35) qui s'insère avec une tolérance fine entre elles. Sur cette figure, on remarque que les orifices (36a à 36d) sont positionnés de manière à tangenter les surfaces inférieures des glissières (2) du rail (B). Dans cette position, ils sont coaxiaux avec des orifices équivalents (37) pratiqués dans les pattes (4) de suspension (voir figures 2 et 3). Tous ces orifices définissent un "couloir" dans lequel on enfiche une clavette (38) qui maintient le moyen de blocage (32).

Les portions courbes de l'une des branches de cette clavette (38), qui en comporte deux d'allure parallèle, s'arcboutent contre les surfaces des éléments de la liaison et assurent une solidarisation de la coiffe (32) et des pattes (4).

Pour la clarté de cette figure 7, on n'y a fait apparaître que les références utiles à la compréhension de cette liaison, sans reprendre celles qui s'appliquent à la liaison panneaux (A) / pattes de suspension (4) / rail (B), que l'on trouve en figures 2 et 3.

Cette coiffe (32) et sa clavette (38) sont également disposées par l'opérateur de la phase finale de montage, qui circule sur le faux-plafond.

En résumé, le procédé de montage comporte une première phase consistant en le clipsage des panneaux nécessaires à la réalisation du faux-plafond, après quoi s'amorce une seconde phase au cours de laquelle un opérateur pénètre sur lesdits panneaux et procède d'une part au verrouillage transversal et d'autre part au montage des coiffes et de leurs clavettes réalisant le blocage vertical. Enfin, les interstices inter-panneaux sont obstrués avec des joints synthétiques, à leurs débouchés sur les surfaces supérieure et inférieure du faux-plafond. Chaque panneau pourra être monté ou démonté individuellement sans altérer les panneaux voisins.

Ces panneaux (A), dont on a expliqué la nature de l'enveloppe à deux parements (5) identiques et bandeau (6) périphérique, sont remplis de matière synthétique, par exemple du type laine de roche haute densité ou équivalente, plaques de polyuréthane ou mousse de polyuréthane injectée selon la nature des fonctions à remplir et des buts à atteindre. L'existence du bandeau présente l'avantage supplémentaire d'éviter la désquamation de laine de roche et de pouvoir servir de fond de joint. Ils subissent également une finition extérieure, préalablement à leur pose, à l'aide de peinture, émail, inox ou équivalent prévus selon le fonctionnement ultérieur, et notamment les ambiances prévisibles.

## Revendications

1. Faux-plafond suspendu circulable pour salle blanche, accessible par l'extérieur de la pièce, constitué de panneaux (A) juxtaposés suspendus à des rails (B) rectilignes parallèles, assurant l'étanchéité entre un plénum défini entre ledit faux-plafond et la dalle supérieure de la pièce et la salle blanche proprement dite, les panneaux (A) étant accrochés aux rails (B) parallèles, qui sont disposés au-dessus de la surface supérieure du faux-plafond dans le volume du plénum, au moyen de pattes de suspension (4) fixées sur la périphérie des panneaux, caractérisé en ce que lesdites pattes (4) se clipsent dans les rails (B) dans lesquels elles peuvent au surplus coulisser, et en ce que les panneaux (A) sont fixés les uns aux autres selon une direction transversale perpendiculaire à la direction des rails par des moyens de verrouillage (16, 17) destinés à assurer la solidarisation des panneaux (A) contigus, et accessibles depuis la surface supérieure du faux-plafond sur laquelle ils sont disposés.

2. Faux-plafond suspendu selon la revendication 1, caractérisé en ce que les pattes de suspension (4) sont disposées sur chaque panneau (A) aux mêmes emplacements, et symétriquement par rapport à la direction des rails (B), de manière à entrer en contact avec les pattes (4) des panneaux (A) contigus.

3. Faux-plafond selon l'une des revendications 1 et 2, caractérisé en ce que les deux pattes (4) en contact de deux panneaux (A) suspendus contigus sont équipées d'un moyen de blocage (32, 38) de tout mouvement vertical relatif pattes (4) / rail (B), à installer après clipsage des panneaux (A) dans leurs rails (B) récepteurs.

4. Faux-plafond suspendu selon l'une des revendications 1 à 3, caractérisé en ce que les interstices résiduels entre panneaux juxtaposés sont équipés de joints (E, E') assurant l'étanchéité entre la salle blanche et le plénum.

5. Faux-plafond suspendu selon l'une des revendications précédentes, caractérisé en ce que les rails comportent deux glissières (2) latérales inférieures permettant d'une part l'accrochage des pattes de suspension (4) des panneaux (A) et d'autre part leur coulissement.

6. Faux-plafond suspendu selon l'une des revendications précédentes, caractérisé en ce que les pattes de suspension (4) sont identiques et divisées en trois parties :
- une partie supérieure (12) d'extrémité de type unciforme (3), destinée à coopérer avec la glissière (2) correspondante du rail (B), dont le tracé du profil interne permet le coulissement dans la glissière et le tracé du profil externe le clipsage dans lesdites glissières (2), en relation avec la forme gobale de cette partie supérieure (3), qui permet un jeu élastique et est décalé au repos vers l'intérieur du panneau (A) de façon à ne pas être en contact avec la partie homologue de la patte de suspension (4) du panneau voisin (A), et à permettre la déformation élastique nécessaire au clipsage,
- une partie médiane (11) au contact de son homologue du panneau (A) voisin, et
- une partie inférieure (10) destinée à la fixation à la périphérie du panneau (A).

7. Faux-plafond suspendu selon la revendication précédente, caractérisé en ce que ladite partie inférieure (10) s'adapte dans le profil d'un côté vertical du panneau (A), qui constitue une glissière (8) permettant un positionnement libre de la patte de suspension (4) à n'importe quel emplacement sur toute la longueur du côté, ainsi que l'adjonction de pattes (4) supplémentaires.

8. Faux-plafond suspendu selon l'une quelconque des revendications précédentes, caractérisé en ce que le moyen de verrouillage (16, 17) transversal des panneaux consiste en un excentrique (16) de verrouillage et une clé (17), qui coopèrent en vue d'assurer une pression mutuelle horizontale constante des panneaux contigus (A), facilitant l'étanchéité des jointures transversales.

9. Faux-plafond suspendu selon la revendication précédente, caractérisé en ce que l'excentrique (16) consiste en une pièce cylindrique, munie d'oreilles planes (22, 23) de fixation au faux-plafond, comprenant des zones longitudinales planes (18, 19) et une rainure (20) d'allure prismatique bordée d'un épaulement (21), parallèles à la génératrice du cylindre, faisant office de came lorsqu'on lui fait subir une rotation d'axe parallèle à ladite génératrice par rapport à la clé (17), et comprenant une fente transversale (29) coopérant avec la clé de verrouillage.

10. Faux-plafond suspendu selon l'une des revendications 8 et 9, caractérisé en ce que la clé de verrouillage (17) comporte une partie inférieure qui coopère avec les glissières (8) de deux panneaux (A) contigus de manière à les plaquer contre sa partie médiane (28) qui les sépare, et une partie supérieure (26) qui repose dans la rainure prismatique (20) au contact de l'épaulement (21) lorsque le verrouillage est réalisé.

11. Faux-plafond suspendu selon l'une quelconque des revendications précédentes, caractérisé en ce que les panneaux (A) sont composés de deux parements (5) identiques reliés par un bandeau (6) périphérique en forme de glissière en T creusé renversé, et remplis d'une matière isolante de type synthétique.

12. Faux-plafond suspendu selon l'une des revendications 10 et 11, caractérisé en ce que la partie inférieure (27) de la clé de verrouillage (17) prend la forme d'un U dont les deux branches s'ajustent dans les glissières (8) en T de deux panneaux (A) contigus de manière à les rappeler vers la partie médiane (28) de la clé (17), dont la partie supérieure (26) comporte une barre horizontale à la manière de la barre supérieure d'un T, s'adaptant dans la rainure (20) prismatique de l'excentrique (16) de verrouillage.

13. Faux-plafond suspendu selon l'une des revendications précédentes, caractérisé en ce que le moyen de blocage du mouvement relatif pattes / rail consiste en une coiffe (32) creuse d'enveloppe parallélépipédique dont la partie supérieure ouverte est découpée de créneaux (33, 34) s'adaptant à la forme des faces latérales (1) verticales du rail (B) et de ses glissières (2) inférieures, dont l'une des faces transversales à l'axe du rail (B) est interrompue pour permettre le passage des deux pattes (4) de suspension, tandis que l'autre comporte un relief (35) s'insérant entre lesdites pattes (4) pour marquer leur écartement à ce niveau et prendre appui sur leurs surfaces.

14. Faux-plafond suspendu selon la revendication 13, caractérisé en ce que ladite coiffe (32), ainsi que les pattes (4), sont munies d'orifices (36a à 36d, 37) pouvant loger une clavette (38), de telle sorte que lorsque la coiffe (32) est en butée supérieure au contact des faces latérales verticales (1) du rail (B) et de ses glissières inférieures (2), la clavette (38) soit en contact avec les portions de la surface inférieure desdites faces (1) du rail, et qu'elle solidarise la coiffe (32) à l'ensemble pattes (4) / rail (B).

15. Faux-plafond suspendu selon la revendication précédente, caractérisé en ce que ladite clavette (38) comporte une double branche dont chacune est au contact de l'autre, l'une étant rectiligne alors que l'autre présente une courbe dans sa partie médiane et un recourbement dans sa partie terminale, le matériau de la clavette étant élastique pour permettre son installation et sa solidarisation à l'enveloppe pattes (4) / rail (B).

16. Procédé de montage d'un plafond suspendu selon les revendications précédentes, caractérisé en ce que les panneaux, préalablement munis de leurs pattes (4) de suspension, sont élevés à partir de la salle blanche et clipsés dans les rails (B) en exerçant une poussée verticale par en-dessous, puis, une fois les panneaux (A) accrochés, ils sont verrouillés transversalement au moyen du système excentrique (16) / clé (17) de verrouillage par un opérateur circulant dans le plénum, qui procède également au verrouillage vertical à l'aide de la coiffe de blocage (32) du mouvement relatif vertical pattes / rail.

## Claims

1. Travelling suspended false ceiling for clean rooms, accessible from the outside of the room, consisting of juxtaposed panels (A) suspended from rectilinear parallel rails (B), providing a seal between a plenum defined between the said false ceiling and the ceiling slab of the room and the clean room proper, the panels (A) being attached to the parallel rails (B), which are disposed above the top surface of the false ceiling in the volume of the plenum, by means of suspension lugs (4) fixed to the periphery of the panels, characterised in that the said lugs (4) snap into the rails (B), in which they are also able to slide, and in that the panels (A) are fixed to each other in a transverse direction perpendicular to the direction of the rails by locking means (16, 17) designed to connect together contiguous panels (A), and accessible from the top surface of the false ceiling over which they are disposed.

2. Suspended false ceiling according to Claim 1, characterised in that the suspension lugs (4) are disposed on each panel (A) at the same locations, and symmetrically with respect to the direction of the rails (B), so as to come into contact with the lugs (4) on contiguous panels (A).

3. False ceiling according to one of Claims 1 and 2, characterised in that the two lugs (4) in contact on two contiguous suspended panels (A) are equipped with a means (32, 38) of blocking any relative vertical movement between lugs (4) and rail (B), to be installed after the panels (A) are snapped into their receiving rails (B).

4. Suspended false ceiling according to one of Claims 1 to 3, characterised in that the residual interstices between juxtaposed panels are equipped with joints (E, E') ensuring a seal between the clean room and the plenum.

5. Suspended false ceiling according to one of the preceding claims, characterised in that the rails have two lower lateral runners (2) allowing firstly the attachment of the suspension lugs (4) on the panels (A) and secondly the sliding thereof.

6. Suspended false ceiling according to one of the preceding claims, characterised in that the suspension lugs (4) are identical and divided into three parts:
- a top end part (12) of the unciform type (3), designed to cooperate with the corresponding runner (2) on the rail (B), the outline of the internal profile of which allows sliding in the runner and the outline of the external profile of which allows snapping into the said runners (2), in connection with the overall shape of this top part (3), which allows elastic play and is offset at rest towards the inside of the panel (A) so as not to be in contact with the homologous part of the suspension lug (4) on the adjacent panel (A), and to allow the elastic deformation required for snapping in,
- a middle part (11) in contact with its homologue on the adjoining panel (A), and
- a bottom part (10) designed for fixing to the periphery of the panel (A).

7. Suspended false ceiling according to the preceding claim, characterised in that the said bottom part (10) fits into the profile of a vertical edge of the panel (A), which constitutes a runner (8) allowing free positioning of the suspension lug (4) at any position along the entire length of the edge, and the addition of additional lugs (4).

8. Suspended false ceiling according to any one of the preceding claims, characterised in that the means (16, 17) for the transverse locking of the panels consists of a locking eccentric (16) and a tab (17), which cooperate for the purpose of providing constant horizontal mutual pressure of the contiguous panels (A), facilitating the sealing of the transverse joins.

9. Suspended false ceiling according to the preceding claim, characterised in that the eccentric (16) consists of a cylindrical piece provided with flat brackets (22, 23) for fixing to the false ceiling, comprising flat longitudinal areas (18, 19) and a groove (20) of prismatic shape bordered by a shoulder (21), parallel to the generator of the cylinder, serving as a cam when it is caused to undergo a rotation with an axis parallel to the said generator with respect to the tab (17), and comprising a transverse slot (29) cooperating with the locking tab.

10. Suspended false ceiling according to one of Claims 8 and 9, characterised in that the locking tab (17) has a bottom part which cooperates with the runners (8) on two contiguous panels (A) so as to press them against its middle part (18) which separates them, and a top part (26) which rests in the prismatic groove (20) in contact with the shoulder (21) when the locking is effected.

11. Suspended false ceiling according to any one of the preceding claims, characterised in that the panels (A) are composed of two identical facings (5) connected by a peripheral facia (6) in the form of a runner in the shape of an inverted hollowed-out T, and filled with an insulating material of a synthetic type.

12. Suspended false ceiling according to one of Claims 10 and 11, characterised in that the bottom part (27) of the locking tab (17) takes the form of a U whose two legs fit into the T-shaped runners (8) of two contiguous panels (A) so as to pull them towards the middle part (28) of the tab (17), the top part (26) of which has a horizontal bar like the top bar of a T, fitting into the prismatic groove (20) of the locking eccentric (16).

13. Suspended false ceiling according to one of the preceding claims, characterised in that the means for locking the relative movement between the lugs and rail consists of a hollow cover (32) with a parallelepipedal envelope whose open top part is cut into crenellations (33, 34) matching the shape of the vertical lateral faces (1) of the rail (B) and of its bottom runners (2), on which one of the faces transverse to the axis of the rail (B) is interrupted to allow the passage of the two suspension lugs (4), whilst the other has a projection (35) fitting between the said lugs (4) to determine their separation at this level and bear on their surfaces.

14. Suspended false ceiling according to Claim 13, characterised in that the said cover (32), and the lugs (4), are provided with orifices (36a to 36d, 37) able to house a key (38), so that when the cover (32) is in top abutment in contact with the vertical lateral faces (1) of the rail (B) and its bottom runners (2), the key (38) is in contact with the portions of the bottom surface of the said faces (1) of the rail, and so that it fixes the cover (32) to the assembly consisting of the lugs (4) and rail (B).

15. Suspended false ceiling according to the preceding claim, characterised in that the said key (38) has a double branch, each of which is in contact with the other, one being rectilinear whilst the other has a curve in its middle part and a bending in its end part, the material of the key being elastic to allow its installation and fixing to the lugs (4) / rail (B) envelope.

16. Method for mounting a suspended ceiling according to the preceding claims, characterised in that the panels, already fitted with their suspension lugs (4), are lifted up from the clean room and snapped into the rails (B) by exerting a vertical thrust from below, and then, once the panels (A) are attached, they are locked transversely by means of the eccentric (16) / locking key (17) system by an operator moving in the plenum, who also carries out the vertical locking by means of the cover (32) for blocking the relative vertical movement between lugs and rail.

## Patentansprüche

1. Begehbare aufgehängte Zwischendecke für Reinraum, die von außerhalb des Raums zugänglich ist und aus nebeneinander angeordneten Platten (A) gebildet ist, die an parallelen, geradlinigen Schienen (B) aufgehängt sind und die Dichtigkeit zwischen dem zwischen der Zwischendecke und der oberen Massivdecke des Raums definierten Hohlraum und dem eigentlichen Reinraum gewährleisten, wobei die Platten (A) an den parallelen Schienen (B), die oberhalb der oberen Oberfläche der Zwischendecke im Volumen des Hohlraums angeordnet sind, mittels Aufhängungshalterungen (4) aufgehängt sind, die am Umfang der Platten befestigt sind, dadurch gekennzeichnet, daß die Halterungen (4) in die Schienen (B) einrasten, in denen sie außerdem gleiten können, und daß die Platten (A) in Querrichtung, die zur Richtung der Schiene senkrecht ist, durch Verriegelungsmittel (16, 17) aneinander befestigt sind, welche dazu vorgesehen sind, die Verbindung von benachbarten Platten (A) zu gewährleisten, und von der oberen Oberfläche der Zwischendecke, auf der sie angeordnet sind, zugänglich sind.

2. Aufgehängte Zwischendecke nach Anspruch 1, dadurch gekennzeichnet, daß die Aufhängungshalterungen (4) an jeder Platte (A) an denselben Stellen und in bezug auf die Richtung der Schienen (B) symmetrisch in der Weise angeordnet sind, daß sie mit den Halterungen (4) der angrenzenden Platten (A) in Kontakt treten.

3. Zwischendecke nach einem der Ansprüche 1 und 2, dadurch gekennzeichnet, daß die zwei Halterungen (4), die mit zwei benachbarten aufgehängten Platten (A) in Kontakt sind, mit einem Mittel zum Sperren (32, 38) jeglicher relativer vertikaler Bewegung zwischen der Halterung (4) und der Schiene (B) versehen sind, das nach dem Einrasten der Platten (A) in ihren Aufnahmeschienen (B) anzubringen ist.

4. Aufgehängte Zwischendecke nach einem der Ansprüche 1 bis 3, dadurch gekennzeichnet, daß die verbleibenden Zwischenräume zwischen den nebeneinanderliegenden Platten mit Dichtungen (E, E') versehen sind, die die Dichtigkeit zwischen dem Reinraum und dem Hohlraum gewährleisten.

5. Aufgehängte Zwischendecke nach einem der vorangehenden Ansprüche, dadurch gekennzeichnet, daß die Schienen zwei untere, seitliche Gleitschienen (2) enthalten, die einerseits die Aufhängung der Aufhängungshalterungen (4) der Platten (A) und andererseits deren Gleiten ermöglichen.

6. Aufgehängte Zwischendecke nach einem der vorangehenden Ansprüche, dadurch gekennzeichnet, daß die Aufhängungshalterungen (4) einander völlig gleich sind und in drei Teile unterteilt sind:
- einen oberen Teil (12) mit hakenförmigem Ende (3), der dazu bestimmt ist, mit der entsprechenden Gleitschiene (2) der Schiene (B) zusammenzuwirken, wobei der Verlauf seines Innenprofils das Gleiten in der Gleitschiene und der Verlauf seines Außenprofils in Verbindung mit der Gesamtform dieses oberen Teils (3) das Einrasten in den Gleitschienen (2) ermöglicht, wobei dieser obere Teil (3) ein elastisches Spiel ermöglicht und in Ruhestellung zur Platte (A) in der Weise verschoben ist, daß er mit dem formgleichen Teil der Aufhängungshalterung (4) der benachbarten Platte (A) nicht in Kontakt ist, und in der Weise, daß die beim Einrasten erforderliche elastische Verformung möglich ist,
- einen mittleren Teil (11), der mit dem formgleichen Element der benachbarten Platte (A) in Kontakt ist und
- einen unteren Teil (10), der für die Befestigung am Umfang der Platte (A) bestimmt ist.

7. Aufgehängte Zwischendecke nach dem vorangehenden Anspruch, dadurch gekennzeichnet, daß der untere Teil (10) an das Profil einer vertikalen Seite der Platte (A) angepaßt ist, das eine Gleitschiene (8) bildet, die eine freie Positionierung der Aufhängungshalterung (4) an jeder beliebigen Stelle auf der gesamten Länge der Seite sowie die Hinzufügung von zusätzlichen Halterungen (4) ermöglicht.

8. Aufgehängte Zwischendecke nach irgendeinem der vorangehenden Ansprüche, dadurch gekennzeichnet, daß das transversale Verriegelungsmittel (16, 17) der Platten aus einer Verriegelungs-Exzenterscheibe (16) und einer Klinke (17) besteht, die zusammenwirken, um einen konstanten, horizontalen, gegenseitigen Druck der benachbarten Platten (A) sicherzustellen, der die Dichtigkeit der transversalen Dichtungen erleichtert.

9. Aufgehängte Zwischendecke nach dem vorangehenden Anspruch, dadurch gekennzeichnet, daß die Exzenterscheibe (16) aus einem zylindrischen Teil besteht, das mit ebenen Ansätzen (22, 23) für die Befestigung an der Zwischendecke versehen ist und ebene longitudinale Zonen (18, 19) sowie eine Rille (20) mit prismatischem Verlauf und einer Schultereinfassung (21), die zur Erzeugenden des Zylinders parallel sind, enthält, als Nocken dient, wenn es um eine zur Erzeugenden parallele Achse in bezug auf die Klinke (17) gedreht wird, und einen transversalen Schlitz (29) enthält, der mit der Verriegelungsklinke zusammenwirkt.

10. Aufgehängte Zwischendecke nach einem der Ansprüche 8 und 9, dadurch gekennzeichnet, daß die Verriegelungsklinke (17) einen unteren Teil, der mit den Gleitschienen (8) von zwei benachbarten Platten (A) in der Weise zusammenwirkt, daß er sie gegen seinen mittleren Teil (28), der sie trennt, preßt, sowie einen oberen Teil (26) enthält, der in der prismatischen Rinne (22) in Kontakt mit der Schulter (21) ruht, wenn die Verriegelung hergestellt ist.

11. Aufgehängte Zwischendecke nach irgendeinem der vorangehenden Ansprüche, dadurch gekennzeichnet, daß die Platten (A) aus zwei benachbarten, völlig gleichen Verkleidungen (5) aufgebaut sind, die durch ein Umfangsband (6) verbunden sind, das als Gleitschiene dient und die Form eines umgedrehten, hohlen T besitzt, und mit einem synthetischen, isolierenden Material gefüllt sind.

12. Aufgehängte Zwischendecke nach einem der Ansprüche 10 und 11, dadurch gekennzeichnet, daß der untere Teil (27) der Verriegelungsklinke (17) die Form eines U annimmt, dessen zwei Schenkel in die T-förmigen Gleitschienen (8) von zwei benachbarten Platten (A) in der Weise eingepaßt sind, daß sie diese zum mittleren Teil (28) der Klinke (17) zurückdrücken, deren oberer Teil (26) einen horizontalen Träger in Form des oberen Balkens eines T enthält, der an die prismatische Rinne (20) der Verriegelungs-Exzenterscheibe (16) angepaßt ist.

13. Aufgehängte Zwischendecke nach einem der vorangehenden Ansprüche, dadurch gekennzeichnet, daß das Mittel zum Sperren der relativen Bewegung zwischen Halterung und Schiene aus einer hohlen Abdeckung (32) mit parallelepipedförmiger äußerer Form besteht, deren offener oberer Teil ausgeschnittene Rechtecke (33, 34) besitzt, die an die Form der vertikalen Seitenflächen (1) der Schiene (B) und ihrer unteren Gleitschienen (2) angepaßt ist, wobei eine der zur Achse der Schiene (B) quer verlaufenden Flächen unterbrochen ist, um den Durchgang von zwei Aufhängungshalterungen (4) zu ermöglichen, während die andere eine Eintiefung (35) enthält, die zwischen die Halterungen (4) einschiebbar ist, um deren Abstand auf dieser Höhe festzulegen und sich an deren Oberflächen abzustützen.

14. Aufgehängte Zwischendecke nach Anspruch 13, dadurch gekennzeichnet, daß die Abdeckung (32) sowie die Halterungen (4) mit Öffnungen (36a bis 36d, 37) versehen sind, die einen Keil (38) in der Weise aufnehmen können, daß dieser dann, wenn die Abdeckung (32) in einer Anschlagposition ist, die den Kontakt der vertikalen Seitenflächen (1) der Schiene (B) und deren unterer Gleitschienen (2) übertrifft, mit den Abschnitten der unteren Oberfläche der Flächen (1) der Schiene in Kontakt ist, und die Abdeckung (32) mit der aus den Halterungen (4) und Schienen (B) gebildeten Baueinheit verbunden ist.

15. Aufgehängte Zwischendecke nach dem vorangehenden Anspruch, dadurch gekennzeichnet, daß der Keil (38) zwei Schenkel enthält, wovon jeder mit dem anderen in Kontakt ist, wobei einer geradlinig ist, während der andere in seinem mittleren Teil eine Krümmung und in seinem Endteil eine Rückkrümmung aufweist, wobei das Material des Teils elastisch ist, um seine Anbringung und Befestigung in der Umfassung der Halterungen (4) und Schienen (B) zu ermöglichen.

16. Verfahren zum Anbringen einer aufgehängten Decke nach den vorangehenden Ansprüchen, dadurch gekennzeichnet, daß die Platten, bevor sie mit ihren Aufhängungshalterungen (4) versehen werden, ausgehend vom Reinraum hochgehoben und in die Schienen (B) eingerastet werden, wobei von unten ein vertikaler Druck ausgeübt wird, woraufhin die Platten (A), sobald sie eingehängt sind, in Querrichtung mittels eines Systems aus Exzenter (16) und Klinke (17) zur Verriegelung durch eine im Hohlraum sich bewegende Bedienungsperson transversal verriegelt werden, wobei die Bedienungsperson außerdem die vertikale Verriegelung mit Hilfe der Abdeckung zum Sperren (32) der vertikalen relativen Bewegung zwischen den Halterungen und den Schienen ausführt.
